# EUROPEAN PATENT SPECIFICATION

(11) **EP 2 250 800 B1**
(45) Date of publication and mention of the grant of the patent: **01.11.2017**
(21) Application number: 08798084.3
(22) Date of filing: 18.08.2008
(51) Int. Cl.: H04M 3/42, H04M 1/57, H04L 29/08, H04L 29/06

(54) **SYSTEM AND METHOD FOR DYNAMICALLY UPDATING AND SERVING DATA OBJECTS BASED ON SENDER AND RECIPIENT STATES**
SYSTEM UND VERFAHREN ZUM DYNAMISCHEN AKTUALISIEREN UND BEREITSTELLEN VON DATENOBJEKTEN AUF DER BASIS VON ABSENDER- UND EMPFÄNGERZUSTÄNDEN
SYSTÈME ET PROCÉDÉ POUR ACTUALISER ET SERVIR DYNAMIQUEMENT DES OBJETS DE DONNÉES SUR LA BASE DES ÉTATS DE L'EXPÉDITEUR ET DU DESTINATAIRE

(30) Priority: 15.02.2008 US 29019; 26.02.2008 US 37392
(43) Date of publication of application: 17.11.2010
(73) Proprietor: Sony Mobile Communications Inc., Shinagawa-ku Tokyo 140-0002 (JP)
(72) Inventor: SÅNGBERG, Troed Nils Rickard, S-21154 Malmö (SE); SEGER, Patrik, 310 44 Gettinge (SE); BLOEBAUM, Leland Scott, Cary North Carolina 27519 (US)
(74) Representative: Banzer, Hans-Jörg
(86) International application number: PCT/US2008/073465
(87) International publication number: WO 2009/102341

(56) References cited:
- EP-A- 1 211 875
- WO-A-03/015380
- WO-A-2005/039159
- DE-A1- 10 110 988
- US-A1- 2005 271 041
- US-B1- 6 922 721

## Description

The present invention relates generally to communication systems. More specifically, the invention relates to the transfer of data objects to communication devices in a communication system.

With the convergence of voice and data communication networks, portable communication devices are increasingly likely to support several communication modes, as well as a number of communication-related applications Single-purpose cellular phones and alphanumeric pagers have given way to complex mobile devices supporting voice communications, e-mail, and instant messaging. A typical device often includes a camera, a music player, and sound recorder, and may include a global positioning system (GPS) receiver. Many of these devices and their supporting wireless networks now enable simultaneous use of multiple communication modes. Thus, a device user today might engage in a voice call and simultaneously send or receive text messages, digital images, video clips, or the like.

A few applications have been developed to take advantage of this simultaneous availability of multiple communication modes. In particular, several patents and patent application publications describe a so-called Phone Pages system, in which the generation and transfer of multimedia data objects is triggered by various communication-related events. These data objects, or Phone Pages, thus supplement a primary communication session, such as a voice call, an e-mail exchange, or an instant message conversation. The Phone Pages concept is described in the following patents and patent application publications,

U.S. Patent No. 6,922,721, titled "Exchange of Information in a Communication System" and issued on July 26, 2005 to Minborg et al.; U.S. Patent Application Publication 2005/0271041 A1 , titled "Exchange of Information in a Communication System" and filed on June 1 , 2005 by Minborg et al.; U.S. Patent No. 6,996,072, titled "Method and Apparatus for Exchange of Information in a Communication Network" and issued on February 7, 2006 to Minborg; U.S. Patent No. 6,977,909, titled "System and Method for Exchange of Information in a Communication Network" and issued on December 20, 2005 to Minborg; and U.S. Patent Application Publication 2006/0114845, also titled "System and Method for Exchange of Information in a Communication network" and filed on November 14, 2005 by Minborg.

A system for customizing call alerts is disclosed in international Publication No. WO 03/015380 A1, titled "A system and Method for Customising Call Alerts". In this system, a participating user uses a first communications terminal to make a call to a second communications terminal, via a first communications service, and the second communications terminal announces the call by activating an alert using an alert descriptor chosen according to the customized alert service configuration for the calling user.

Systems for enhancing conventional caller identification techniques are disclosed in International Publication No. WO 2005/039159 A1, titled "caller Identification Employing a Digital Content Set," and European Patent Application EP 1 211 875 A2, titled "System and method for delivering profile information relating to a caller." In the former document, a processing system receives one or more digital content sets, a caller system identifier, and a called system identifier from the caller system. The processing system selects a digital content set from among the one or more digital content sets using the Identifiers, and provides the selected digital content set to the called system corresponding to the called system identifier. In the latter document, a caller profile system and service enables a caller to establish a caller profile which is to be selectably delivered to called parties contemporaneously with the delivery of a call. The caller profile may include text information, Images, sound or other multimedia content.

The communication techniques and systems described in the preceding references provide a variety of enhancements to conventional modes of communication, facilitating the convenient exchange of various data objects between users of communication devices. These enhancements may be quite valuable both for promoting personal relationships and for supporting business and enterprise communications. However, the suitability of certain data objects for exchange at a particular time may vary, depending on the context, or the "state", of one or more parties engaged in a particular communications activity. Thus, further methods are needed for creating, managing, and exchanging rich data objects that represent or incorporate various aspects of a communication system user's current state.

### SUMMARY

The invention is defined in independent claims 1 and 7. Methods and apparatus for managing the distribution of data objects in a communication network are disclosed. In the disclosed embodiments, selection and distribution of data objects depends upon "state" information for one or more user devices. This state information may include, but is not limited to: the time and date; a device user's location, motion or velocity; environmental conditions such as temperature, ambient lighting, or ambient sounds; whether or not the user is with other people, as well as the identities of those people; the device's proximity to various resources; and the user's current or recent activities.

In an exemplary method, such as might be implemented at a data object server, a plurality of data objects corresponding to a first user of a first communication device are stored. State information for the first communication device is received from the first device. The occurrence of a trigger event related to communications between the first communication device and a second communication device is detected, and one of the stored data objects is selected, based on the detected trigger event and the received state information, and forwarded to the second communication device. In some embodiments, the selection of the data object is further based on an identifier corresponding to the second communication device.

Accordingly, embodiments of the present invention include, but are not limited to, the following:
(a) A method for managing the distribution of data objects in a communication network, comprising: storing a plurality of data objects corresponding to a first user of a first communication device; receiving state information for the first communication device; detecting a trigger event related to communication between the first communication device and a second communication device; selecting one of the data objects based on the detected trigger event and the state information; and sending the selected data object to the second communication device. Possible trigger events on which the selecting is based include at least (a) an initial establishment of a communication session and (b) a communication session is disconnected.
(b) A method as in (a), wherein detecting a trigger event related to communication between the first communication device and a second communication device comprises receiving a message from the first communication device, the message comprising an indicator corresponding to the detected trigger event and state information for the first communication device.
(d) A method as in (a), further comprising receiving an identifier corresponding to the second communication device or a user of the second communication device, wherein selecting one of the data objects is further based on the identifier
(e) A method as in (a), wherein the state information comprises location information or velocity information, or both, corresponding to the first communication device.
(f) A method as in (a), wherein the state information comprises presence information or sensor information corresponding to one or more of ambient temperature, ambient sound, ambient light, acceleration, and pressure, at the first communication device, or both.
(h) A method as in (a), wherein the selected data object is configured to be modified with state information, and wherein the method further comprises modifying the selected data object with the received state information prior to sending the modified data object to the second communication device.
(i) A device comprising processing circuitry configured to: store a plurality of data objects corresponding to a first user of a first communication device; detect a trigger event related to communication between the first communication device and a second communication device; select one of the data objects based on the type of trigger event detected and the state information for the first communication device; and send the selected data object to the second communication device. Possible trigger events on which the selecting is based include at least (a) an initial establishment of a communication session and (b) a communication session is disconnected.
(j) A device as in (i), wherein the device is a data object server, and wherein the processing circuitry is configured to detect a trigger event related to communication between the first communication device and a second communication device by receiving a message from the first communication device, the message comprising an indicator corresponding to the trigger event and state information for the first communication device.
(l) A device as in (i), wherein the device is a data object server, and wherein the processing circuitry is further configured to receive an identifier corresponding to the second communication device or a user of the second communication device, and wherein the selection of the one of the data objects is further based on the identifier.
(m) A device as in (i), wherein the device is a data object server, and wherein the state information comprises one or more of: location information or velocity information, or both, corresponding to the first communication device; presence information corresponding to the first communication device; and sensor information corresponding to one or more of ambient temperature, ambient sound, and ambient light, at the first communication device.
(p) A device as in (i), wherein the device is a data object server, and wherein the selected data object is configured to be modified with state information, and wherein the processing circuitry is further configured to modify the selected data object with the received state information prior to sending the modified data object to the second communication device.
(q) A device as in (i), wherein the device is the first communication device and wherein the processing circuitry is further configured to: determine state information for the first communication device for use in selecting the data object.
(r) A device as in (q), wherein the processing circuitry is further configured to select the one of the data objects based on an identifier for the second communication device.
(s) A device as in (q), wherein the state information comprises location information or velocity information, or both, corresponding to the first communication device.
(t) A device as in (q), wherein the selected data object is configured to be modified with state information, and wherein the processing circuitry is further configured to modify the selected data object with the state information prior to sending the modified data object to the second communication device.

Of course, those skilled in the art will appreciate that the present invention is not limited to the above contexts or examples, and will recognize additional features and advantages upon reading the following detailed description and upon viewing the accompanying drawings.

### BRIEF DESCRIPTION OF THE DRAWINGS

Figure 1 illustrates a communication system according to one or more embodiments of the present invention.
Figure 2 illustrates an exemplary system for transferring data objects between communication devices in a communication system.
Figure 3 is a logic flow diagram according to one or more embodiments of the present invention.
Figure 4 is a block diagram illustrating an exemplary communication device.
Figure 5 is a block diagram illustrating an exemplary data object server.

### DETAILED DESCRIPTION

The present invention is described below in reference to a wireless telecommunication system providing voice and data services to a mobile device. Various systems providing voice and data services have been deployed, such as GSM networks (providing circuit-switched communications) and GPRS (providing packet-switched communications); still others are currently under development. These systems may employ any or several of a number of wireless access technologies, such as Time Division Multiple Access (TDMA), Code Division Multiple Access (CDMA), Frequency Division Multiple Access (FDA), Orthogonal Frequency Division Multiple Access (OFDMA), Time Division Duplex (TDD), and Frequency Division Duplex (FDD). The present invention is not limited to any specific type of wireless communication network or access technology. Indeed, those skilled in the art will appreciate that the network configurations discussed herein are only illustrative. The inventive techniques disclosed herein may be applied to "wired" devices accessing conventional voice or data networks, as well as wireless devices. The invention may be practiced with devices accessing voice and/or data networks via wireless local area networks (WLANs) or via one or more of the emerging wide-area wireless data networks, such as those under development by the 3^{rd}-Generation Partnership Project (3GPP).

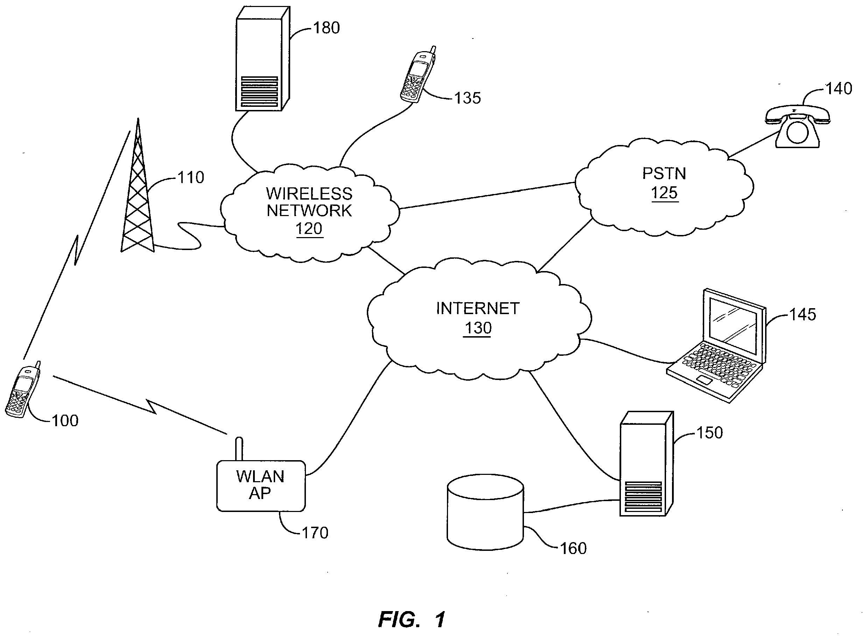

Figure 1 illustrates an exemplary communication system in which the present invention may be employed. Communication device 100 communicates with other devices through base station 110, which is connected to wireless network 120. Wireless network 120 is in turn connected to the Public Switched Telephone Network (PSTN) 125 and the Internet 130. Communication device 100 can thus communicate with various other devices, such as wireless device 135, conventional land-line telephone 140, or personal computer 145. In Figure 1, communication device 100 also has access to data server 150 via the Internet 130; data server 150 may be configured to provide access through Internet 130 to data or applications stored in storage device 160. Storage device 160 may comprise one or more of a variety of data storage devices, such as disk drives connected to data server 150 or one or more other servers, a Redundant Array of Inexpensive Drives (RAID) system, or the like.

Communication device 100 may be a cordless telephone, cellular telephone, personal digital assistant (PDA), communicator, computer device, or the like, and may be compatible with any of a variety of communications standards, such as the Global System for Mobile Communications (GSM) or one or more of the standards promulgated by 3GPP. Communication device 100 may include a digital camera, for still and video images, as well as a digital sound recorder and digital music player application. Communication device 100 may also support various applications in addition to voice communications, such as e-mail, text messaging, picture messaging, instant messaging, video conferencing, web browsing, and the like.

Communication device 100 also includes a wireless local-area network (WLAN) transceiver configured for communication with WLAN access point 170. WLAN access point 170 is also connected to Internet 130, providing communication device 100 with alternative connectivity to Internet-based resources such as data server 150.

Also connected to wireless network 120 is location server 180. Location server 180 is typically maintained by the operator of wireless network 120, but may be separately administered. The main function of location server 180 is to determine the geographic location of communication devices (such as communication device 100) using the wireless network 120. Location information obtained by location server 180 may range from information identifying the cell currently serving communication device 100 to more precise location information obtained using Global
Positioning System (GPS) technology. Location-based services provided by location server 180, either by itself or in conjunction with other servers, may include the translation of geographic location information (e.g., latitude and longitude) into an address or a place name. Thus, location information provided by location server 180 may indicate that a mobile terminal is at "home", or in "Raleigh," instead of or in addition to indicating physical coordinates.

Other technologies, including triangulation methods exploiting signals transmitted from or received at several base stations, may also be used to obtain location information. Triangulation techniques may include Time Difference of Arrival (TDOA) technology, which utilizes measurements of a mobile's uplink signal at several base stations, or Enhanced-Observed Time Difference (E-OTD) technology, which utilizes measurements taken at the communication device 100 of signals sent from several base stations. GPS-based technologies may include Assisted GPS, which utilizes information about the current status of the GPS satellites derived independently of the communication device 100 to aid in the determination of the terminal's location.

A user of a communications system, whether a mobile user or a user of a fixed communications terminal, operates within a context. Although conventional presence information is part of that context, the full scope of a user's context is much broader than the availability and/or willingness of a user to communicate. The user's context, or "state," includes such parameters as the time and date, the user's location, the user's motion or velocity, as well as environmental conditions such as temperature, ambient lighting, or ambient sounds. The user's state may also include whether or not the user is with other people, as well as the identities of those people. The user's proximity to resources (electronic or otherwise) and the user's current or recent activities (electronic or otherwise) are also aspects of his or her state.

When a user is engaged with a communication device, many of these aspects of state can be sensed by the communication device, or determined by user-provided input. Ambient conditions may be sensed by light and temperature sensors, and microphones. Time and date may be determined by clock and calendar resources contained in the communication device or accessible over a network connection. Location and velocity may be determined by the device itself, retrieved from a network-based positioning resource, or determined by some combination of device and network resources. Location might also be determined from proximate resources, such as a beacon transmitted over a short-range wireless link from a fixed device near a device user's current location. Certain activities of a device user may be detected directly from the user's engagement with the device (e.g., the user is interacting with an e-mail application or a video game, or simultaneously with both), or may be inferred by sensor inputs (e.g., the user must be traveling, since the device is moving at fifty miles per hour, or the user must be exercising, since a pedometer in the device is detecting a regular and sustained running motion.) Of course, other aspects of state, such as the user's mood or current preferences might be signaled directly by the user, in response to queries by the device, or by other user input. Those skilled in the art will appreciate that a rich collection of state-related information is thus available to a communication device using well-known technologies.

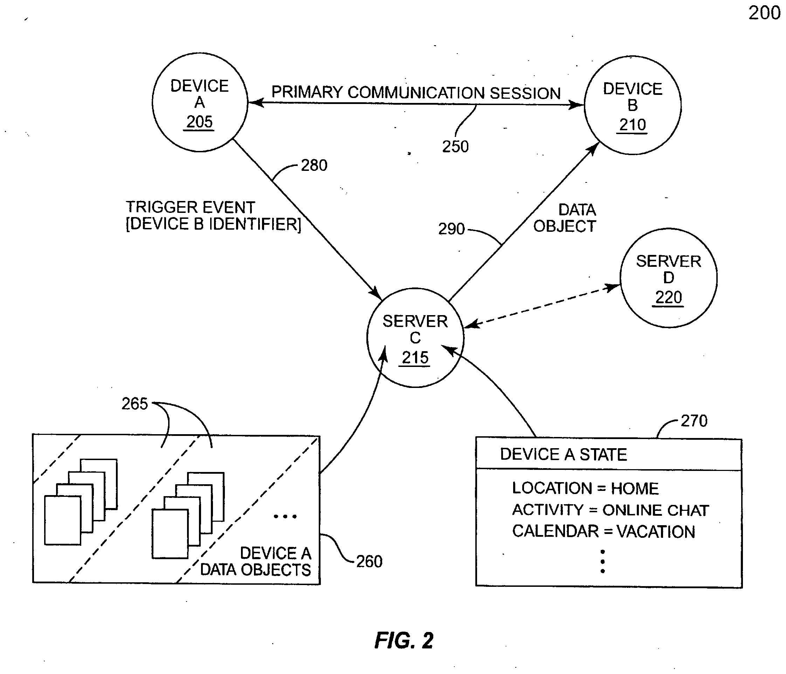

Figure 2 presents a simplified view of a system 200 for managing the distribution of data objects in a communications system according to one embodiment of the present invention. System 200 includes a first communication device A 205 engaged in a communication session 250 with a second communication device B 210. System 200 further includes a data object server C 215 and an external server D 220. In some embodiments, communication devices A 205 and B 210 may comprise any of the end user devices described herein, such as, for example, communication device 100 of Figure 1, and data object server C 215 may comprise any of the servers described herein, such as data server 150 or location server 180 of Figure 1. Although data object server C 215 is pictured in Figure 2 as a separate network element, those skilled in the art will appreciate that various functions of data object server C 215 may be performed at either or both endpoints of the primary communication session, e.g., at communication device A 205 or communication device B 210, in some embodiments of the invention.

In some embodiments, the various systems and methods described herein enable the delivery of customized and/or context-specific data objects to one or more participants in a communication session. These data objects may comprise digital audio, digital images, video clips, text, or the like. In some embodiments, the data objects may be specifically related to various events occurring during a communication session between communication devices A 205 and B 210, such as the Phone Pages described in the earlier-referenced patents and patent applications. In a Phone Pages system, for example, data object server C 215 may store several data objects, or "Phone Pages," for use by communication device A 205. These data objects may have been customized for or by the user of communication device A 205. In some embodiments, a group 260 of data objects corresponding to communication device A 205 may be subdivided into sub-groups 265, with each sub-group specifically designated for use in association with specific communications partners, as will be explained more fully below.

Data object server C 215 may also maintain information characterizing the "state", or "context" of communication device A 205, communication device B 210, or both. Exemplary state information for communication device A 205 is pictured in Figure 2 as state information 270. Data object server C 215 may, for instance, periodically receive state information from communication device A 205, perhaps as part of a scheduled reporting scheme, or in response to periodic queries from data object server C 215. Alternatively, data object server C 215 may receive state information from communication device A 205 (and/or communication device B 210) intermittently, such as after a change in state as determined by the user device. State information for communication device A 205 may also comprise presence information, as conventionally used in instant messaging systems.

Upon detection of a triggering event, as shown at 280, one or more of the stored data objects may be selected, based on the particular triggering event that was detected, and forwarded to the second communication device B 210, as shown at 290. In some embodiments, some or all of the data objects, or data to be sent along with one or more data objects, are retrieved from a second server D 220.

In some embodiments, the selection of the stored data object may also depend on an identifier corresponding to communication device B 210. Thus, Figure 2 illustrates that the trigger event at 280 may be accompanied by an optional identifier corresponding to communication device B 210. This identifier may be directly associated with the device itself, such as a telephone number, an International Mobile Equipment Identifier (IMEI), or MAC address, or may be associated with the device's user, such as a login name, a subscriber identifier, or the like.

The triggering events may include, for example, the initial establishment of a voice call or other communication session, or a change in communication status, such as a caller being placed on hold, or the arrival or departure of another party to a multi-party communication session. Other trigger events might include, but are not limited to:
An outgoing call is or is about to be initiated;
A called party answers a call;
A called party is busy;
A called party fails to answer for a pre-determined time or number of rings;
A called party rejects a call;
A called party is unavailable (e.g., an addressed mobile phone is out of coverage);
An incoming call is imminent or has just begun;
A conference call is or is about to be initiated;
A call is disconnected;
A party is placed on hold;
The location of a party has changed;
A communication device is switched on or off;
A special-function button is pressed on a communication device;
A button or other user interface device is activated in response to a query;
A voice mail, text message, e-mail, instant message, or the like is received; or
A voice mail, text message, e-mail, instant message, or the like is sent.

While many of the preceding trigger events are related to traditional voice communications, those skilled in the art will appreciate that many analogous trigger events will apply to other communication modes, such as instant messaging, e-mail, video conferencing, "chat" sessions, and so on.

In any event, the particular data object selected for a given trigger event (and, in some cases, for a given second communication device or user) may also depend on the current state information for the first communication device. Thus, the data object sent to the second communication device will vary with the state of the first communication device.

For example, a conventional Phone Pages system might be configured to send a first data object to communication device B 210 upon initiation of a call by communication device A 205 (e.g., an animation labeled "Hi, Bill is calling!"). Later, upon termination of the call (a second triggering event), a second data object is sent (e.g., another animation labeled "See you later!). In some embodiments of the present invention, however, the selection of a particular data object may be further refined with state information corresponding to the first communication device. So, for example, the selected data object may vary depending on the location of the first communication device. Thus, the initiation of a call from communication device A 205 to communication device B 210 may result in the delivery of a data object including an animation labeled "Bill is calling from home" or even "Bill is calling from Timbuktu!".

The last example illustrates an additional aspect of some embodiments of the present invention. The state information for the first communication device may be used not only to select a particular data object for delivery to the second communication device, but also to modify the data object before delivery. For instance, the state information may indicate that communication device A 205 is not at home, but is traveling. As a result, upon detection of a relevant trigger event, data object server C 215 may select a data object that corresponds to a state of "traveling" (or "not home"), rather than one that corresponds to "home." The "traveling" data object, however, may actually comprise a template that may be "filled in" using state information. Thus, the "traveling" data object may include the text "Hi, Bill is calling from <<blank>>," where "«blank»" is intended to be replaced with a current location for communication device A 205. If the state information for communication device A 205 indicates a location of "Raleigh," "Timbuktu," or "office," then data object server C 215 simply inserts the location information into the data object before delivering it to communication device B 210.

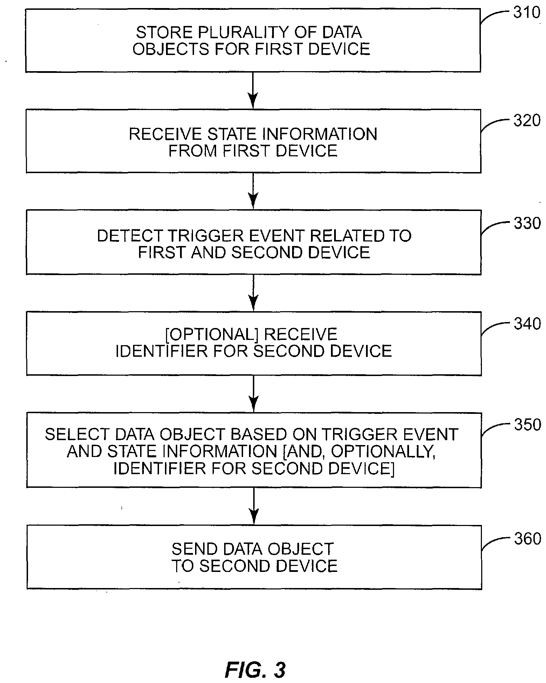

The Phone Pages scenarios described above are but a few exemplary embodiments of the present invention. Those skilled in the art will readily appreciate that other scenarios and sequences of events are possible, and that the techniques disclosed herein are applicable to a variety of devices and network configurations. Accordingly, Figure 3 illustrates a generalized logic flow according to one or more embodiments of the invention.

At block 310, several data objects associated with a first communication device are stored. As discussed above, each of these data objects may be associated with one or more trigger events, as well as with one or more possible states for the first communication device and/or its user. Further, in some embodiments, two or more groups of data objects associated with the first communication device may be stored, wherein each group is associated with a second communication device or user or a group of communication devices and/or users. In this manner, data objects customized for individuals or groups may be stored.

At block 320, state information is received from the first communication device. As discussed above, this state information may be received in response to a request, or may be unsolicited. In some embodiments, the state information may be received on a scheduled basis from the communication device, while in others the state information may only be received when one or more monitored state variables change at the first communication device. Those skilled in the art will appreciate that conventional means may be used for communicating the state information from the communication device A 205 to the data object server C 215, as well as for communicating triggering event information or other information. In some embodiments, SMS or MMS messaging may be used. In other embodiments, for instance, the state information may be sent using an HTTP POST message, although, of course, protocols other than HTTP may be employed.

State information received from the communication device at block 320 may be used to update a stored state profile for the first communication device, which may include state information previously received from the first communication or state information received from other sources, such as a location server, a network-based calendar, or the like.

At block 330, one of several possible trigger events related to communications between the first communication device and a second communication device is detected. In some embodiments, the trigger event may be detected simply by receiving a message from the first communication device (or the second communication device, or both) indicating a particular trigger event. In some embodiments, the data object server at which the method of Figure 3 is implemented may be involved in providing the communications service between the first and second communication devices, and may thus detect the triggering event from signaling derived from the communications service.

At block 340, an optional step is illustrated, in which an identifier for the second device is received. Like the trigger event, the identifier may be determined from a message received from the first communication device, or derived from signaling information related to the communications session between the first and second communication devices.

At block 350, one of the stored data objects is selected, based on the trigger event and the state information for the first communication device. Optionally, the selection of the data object is further based on the identifier for the second communication device. Thus, as discussed earlier, the selected data object may vary depending on the particular triggering event, the current state of the first communication device (or its user), as well as depending on the identity of the second communication device user.

In some embodiments, a data object may be assembled from two or more component data items, again with the trigger event type and/or device identifiers used as parameters for selecting which data items to use in forming the data object. In some embodiments, a portion of the data object or the entire data object may be retrieved from a remote source, such as a second server. In some embodiments, a selected data object may comprise a template which is merged with state information for the first communication device to form the data object ultimately sent to the second communication device.

Finally, at block 360, the selected data object is forwarded to the second device. Those skilled in the art will appreciate that today's communications speeds are such that the selected data object may be received and rendered at the second communication device very quickly, in some cases so quickly that it appears to a user of the second communication device to arrive simultaneously with the occurrence of the triggering event itself.

Those skilled in the art will appreciate that the method illustrated in Figure 3 may be implemented at a data object server providing one or more communication services for the first communication device. Those skilled in the art will further appreciate that the illustrated method may also be implemented at the first communication device itself, with the first communication device configured to store the plurality of data objects.

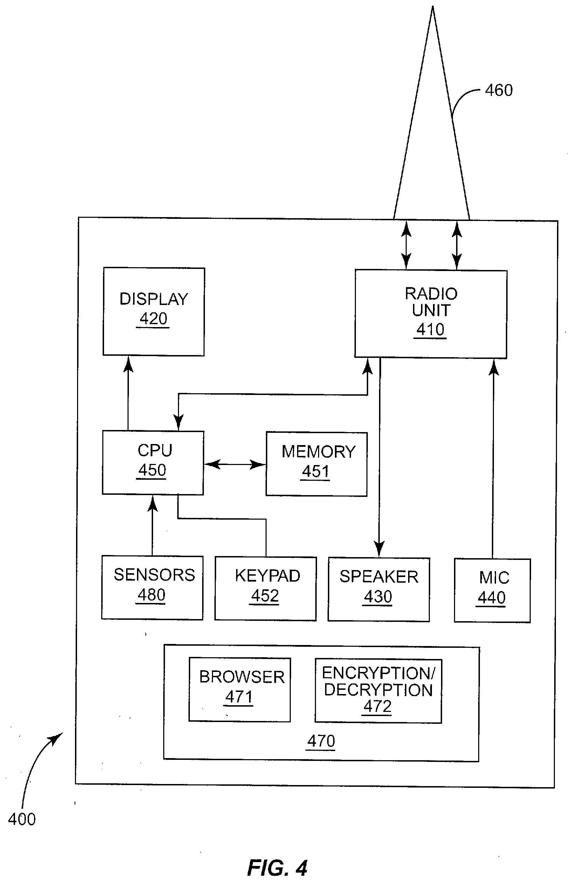

Figure 4 thus illustrates an exemplary communication device 400 to be used in one embodiment of the present invention. In the pictured embodiment, communication device 400 may comprise a mobile telephone, or a personal digital assistance (PDA) device with mobile telephone capabilities. Communication device 400 includes a central processing unit (CPU) 450, connected to at least one memory unit 451, and at least one display 420. The CPU 450 may also be connected to a keyboard device or area 452 to allow subscribers to enter, for example, digits or alphanumeric characters. The memory unit 451 may include non-volatile memory (e.g., flash, EEPROM or SIM card) in order to retain stored information, should power be temporarily unavailable.

The CPU 450 is further connected to a radio unit 410 configured to convert incoming and outgoing data to and from radio frequency (RF) modulated signals. The radio unit 410 also connects to an antenna 460 for transmission and reception of the RF signals. Radio unit 410 may also directly or indirectly be connected to an earphone 430 and a microphone 440 in order to allow voice communication. Communication device 400 may further comprise a plurality of programs 470, such as a browser 471, that can render at least one type of data object, and an encryption/decryption engine 472, allowing data object requests to be encrypted and data objects to be decrypted. Communication device 400 may optionally be equipped with a cache memory in which it is possible to store and retrieve data objects without occupying transmission resources within the communication network.

Device 400 is further equipped with one or more sensors 480. Sensors 480 may include a positioning sensor, such as a GPS receiver. Sensors 480 may also include one or more of several other sensors, such as a temperature sensor, a light sensor, a touch sensor, a pedometer, an acoustic sensor, an accelerometer, one or more pressure sensors (such as a "squeeze" sensor, touch sensor, or the like) and so on.

In some embodiments of the present invention, CPU 450 and/or other processing logic included in communication device 400 is configured to carry out one or more of the methods described above. In particular, communication device 400 may comprise processing logic configured to store and maintain a plurality of data objects, and to determine and maintain state information using one or more sensors 480, user input (via, for example, keypad 452 or microphone 440), etc. Upon detecting a trigger event related to communication between communication device 400 and a second communication device, CPU 450 and/or other processing logic may be configured to select one of the stored data objects based on the detected trigger event and the current state information for the device. In some embodiments, the CPU 450 and/or other processing logic may be configured to select the data object further based on an identifier for the second device. Finally, CPU 450 and/or other processing logic may be configured to send the selected data object to the second communication device using, for example, radio unit 410.

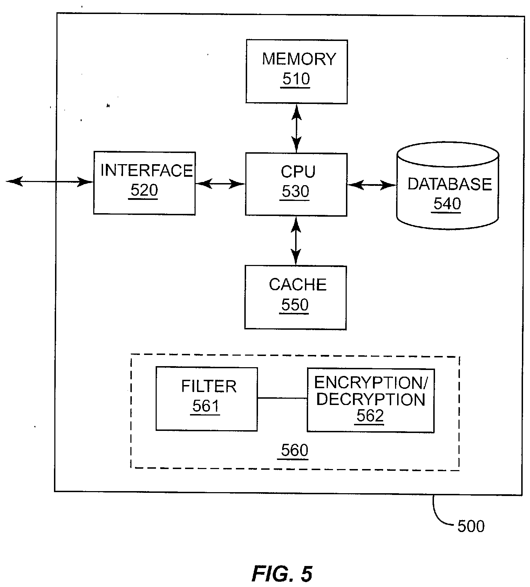

Figure 5 illustrates an exemplary data object server 500 according to one or more embodiments of the present invention. Data object server 500 comprises at least one CPU 530 connected to at least one memory device 510, a cache memory 550, at least one database 540 and at least one network interface 520. Memory devices 510 and databases 540 may include non-volatile memory, such as flash, magnetic, or optical storage devices. Network interface 520 enables the CPU 530 to send and receive data to/from the data network 130. The cache memory 550 allows storage of frequently used data objects so that the CPU 530 may obtain them readily. The database 540 contains stored data objects associated with one or more communication devices, such as communication device 400, as well as state information maintained for the one or more communication devices. The data object server may further comprise a number of programs 560 including, but not limited to, a filter 561, allowing the data objects to be optimized according to the rendering capabilities of the communication device 400, and an encryption/decryption engine 562, allowing data object requests to be decrypted and data objects to be encrypted.

In some embodiments of the present invention, the data object server 500 is configured to carry out one or more of the methods described above. In particular, data object server 500 may comprise processing logic (e.g., CPU 530, configured with appropriate software) configured to receive and maintain state information for one or more communication devices, such as communication device 400. The data object server 500 may receive state information from the communication device itself or from other network-connected entities, or may determine state information for the communication device based on a service provided to the communication device by the data object server 500.

The processing logic of data object server 500 may be further configured to detect the occurrence of a trigger event associated with communication between a first and second communication device. In some embodiments, the trigger event is detected by the receipt of a trigger event message from the first communication device. In response to the trigger event/trigger event message, the data object server is configured to select and retrieve a data object associated with the first communication device, based on the detected trigger event and the state information for the first communication device. In some embodiments, this comprises retrieving the data object from database 540 or cache 550; in other embodiments or circumstances this may comprise requesting a data object from a remote data object server and receiving the data object in response. In some embodiments, the processing logic of data object server 500 may be configured to receive an identifier for the second communication device, e.g., via a message from the first communication device or the second communication device, and to select the data object further based on the identifier. Finally, data object server 500 is configured to send the selected data object to the second communication device using, for example, network interface 520.

Those skilled in the art will appreciate that the various functions of communication device 400 and data object server 500 may be performed using various combinations of hardware and software. Accordingly, each of the described processing blocks may in some embodiments directly correspond to one or more commercially available or custom microprocessors, microcontrollers, or digital signal processors. In other embodiments, however, two or more of the processing blocks or functional elements of device 400 or data object server 500 may be implemented on a single processor, while functions of other blocks are split between two or more processors. Likewise, memories 451 and 510 are representative of the one or more memory devices containing the software, firmware, and data used to implement base station functionality in accordance with one or more embodiments of the present invention. Thus, these memory devices may include, but are not limited to, the following types of devices: cache, ROM, PROM, EPROM, EEPROM, flash, SRAM, and DRAM.

In general, the previously described embodiments of the present invention relate to the dynamic creation, updating, and transmission of data objects within a communication network, based on various data that defines a user's state. A user's state may also be used to allow an intended recipient of a data object to filter or modify processing of these data objects based on his own preferences and state. As discussed above, data objects may be exchanged between users in relation to a primary communication between the users, but of course, data objects may be independently distributed as well.

As discussed above, a user's state may consist of a collection of input from sensors on the user's mobile devices as well as the user's state of activity on a communication network, conventionally considered as presence. Sensor data relating to state may include position (e.g., by GPS), degree of motion (e.g., by GPS or accelerometer), ambient temperature, sound, or light conditions in the user's environment, biometric data about the user, presence of other persons in proximity of the user, or other such data. In sum, the user's state may be a multivalued variable that is created from a fusion of a complex set of data.

Because of its complexity, a user's state may change very often depending on how the user interacts with others and his environment. The user may wish to continuously update others within his social network about his state - this is an enhanced form of presence that is exploited by the service known as "Twitter" (see http://www.twitter.com, or see http://en.wikipedia.orglwiki/Twitter). While some users may find these updates interesting or helpful, others may find them annoying. Of course, the usefulness of state updates from a remote friend or colleague may depend, in turn, upon the recipient's current state.

Thus, in one aspect of the communication systems contemplated herein, users who are part of a social network that utilizes state information may establish filtering mechanisms for receiving state
information about other users in the social network. These filtering mechanisms are based, in whole or in part, upon the user's own state. For example, User A may choose to filter state updates from some or all other users in the social network based on User A's location. Likewise, User A may choose to filter certain elements of other users' state updates based on a combination of his own state and the state of the other user or users. For example, User A might have many persons from different countries in his social network. His interest in information regarding a particular person will naturally differ depending upon whether User A is currently in the same country as that person - regardless of whether it was User A who traveled to another country, or if that other person traveled to User A's country. In essence, User A may dynamically change his subscription to updates of the states of others in his social network based upon his own state.

As discussed in detail above, a user may utilize his state to dynamically select or modify the data objects that are provided in association with a primary communication with another user.
In another aspect of state-sensitive communications, a user who is the intended recipient of one of these data objects (e.g., Phone Pages) from another user may utilize his state information to filter or reject data objects from that user. For instance, User B may determine that when he is in motion in a noisy environment, he does not wish to receive all or some particular category of data objects during a communication with one or more users, including User A. User B may then set up his data objects filter to reject those unwanted data objects from User A, as a function of User B's current state. This filter may be in User B's device itself, or it may be in a server with access to User B's current state information. Such a server may include a "state management" function that maintains the state of the members of the social network, or it may be state-less and simply query the intended recipient for his state prior to sending a data object.

Those skilled in the art should thus appreciate that the present invention broadly provides methods and apparatus for managing the distribution of data objects in a communication network. The present invention may, of course, be carried out in other specific ways than those herein set forth without departing from the scope and essential characteristics of the invention. Thus, the present invention is not limited to the features and advantages detailed in the foregoing description, nor is it limited by the accompanying drawings. Indeed, the present invention is limited only by the following claims.

## Claims

1. A method for managing the distribution of data objects in a communication network, comprising:
storing (310) a plurality of data objects (265) corresponding to a first user of a first communication device (205);
receiving (320) state information (270) from the first communication device (205) or determining state information (270) for the first communication device (205);
detecting (330) a trigger event related to communication between the first communication device (205) and a second communication device (210);
selecting (350) one of the data objects (265) based on the type of trigger event detected, and the state information (270); and
sending (360) the selected data object to the second communication device (210), such that possible trigger events on which the selecting is based include at least (a) an initial establishment of a communication session and (b) a communication session is disconnected.

2. The method of claim 1, wherein detecting (330) the trigger event related to communication between the first communication device (205) and the second communication device (210) comprises receiving a message from the first communication device (205), the message comprising an indicator corresponding to the detected trigger event and the state information (270) for the first communication device (205).

3. The method of claim 1, further comprising receiving (340) an identifier corresponding to the second communication device (210) or a user of the second communication device (210), wherein selecting one of the data objects (265) is further based on the identifier.

4. The method of claim 1, wherein the state information (270) comprises location information or velocity information, or both, corresponding to the first communication device (205).

5. The method of claim 1, wherein the state information (270) comprises presence information or sensor information corresponding to one or more of ambient temperature, ambient sound, ambient light, acceleration, and pressure, at the first communication device (205), or both.

6. The method of claim 1, wherein the selected data object is configured to be modified with the state information (270), and wherein the method further comprises modifying the selected data object with the state information (270), and wherein sending the selected data object comprises sending the modified data object to the second communication device (210).

7. A device comprising processing circuitry configured to:
store a plurality of data objects (265) corresponding to a first user of a first communication device (205);
receive state information (270) from the first communication device (205) or determine state information (270) for the first communication device (205);
detect a trigger event related to communication between the first communication device (205) and a second communication device (210);
select one of the data objects (265) based on the type of trigger event detected and state information (270) for the first communication device (205); and
send the selected data object to the second communication device (210), such that possible trigger events on which the selecting is based include at least (a) an initial establishment of a communication session and (b) a communication session is disconnected.

8. The device of claim 7, wherein the device is a data object server (500), and wherein the processing circuitry is configured to detect the trigger event related to communication between the first communication device (205) and the second communication device (210) by receiving a message from the first communication device (205), the message comprising an indicator corresponding to the detected trigger event and the state information (270) for the first communication device (205).

9. The device of claim 7, wherein the device is a data object server (500), and wherein the processing circuitry is further configured to receive an identifier corresponding to the second communication device (210) or a user of the second communication device (210), and wherein the selection of the one of the data objects (265) is further based on the identifier.

10. The device of claim 7, wherein the device is a data object server (500), and wherein the state information (270) comprises one or more of: location information, velocity information, or both, corresponding to the first communication device (205); presence information corresponding to the first communication device (205); and sensor information corresponding to one or more of ambient temperature, ambient sound, and ambient light, at the first communication device (205).

11. The device of claim 7, wherein the device is a data object server (500), and wherein the selected data object is configured to be modified with state information (270), and wherein the processing circuitry is further configured to modify the selected data object with the state information (270) prior to sending the modified data object to the second communication device (210).

12. The device of claim 7, wherein the device is the first communication device (400, 500), and wherein the processing circuitry is configured to obtain the state information by:
determining the state information (270) for the first communication device (205) for use in selecting the data object.

13. The device of claim 12, wherein the processing circuitry is further configured to select the one of the data objects (265) based on an identifier for the second communication device (210).

14. The device of claim 12, wherein the state information (270) comprises location information or velocity information, or both, corresponding to the first communication device (205).

15. The device of claim 12, wherein the selected data object is configured to be modified with the state information (270), and wherein the processing circuitry is further configured to modify the selected data object with the state information (270) prior to sending the modified data object to the second communication device (210).

## Patentansprüche

1. Verfahren zum Verwalten der Verteilung von Datenobjekten in einem Kommunikationsnetz, umfassend:
Speichern (310) mehrerer Datenobjekte (265), welche sich auf einen ersten Benutzer einer ersten Kommunikationsvorrichtung (205) beziehen;
Empfangen (320) einer Statusinformation (270) von der ersten Kommunikationsvorrichtung (205) oder Bestimmen einer Statusinformation (270) für die erste Kommunikationsvorrichtung (205);
Erfassen (330) eines Auslöseereignisses, welches auf eine Kommunikation zwischen der ersten Kommunikationsvorrichtung (205) und einer zweiten Kommunikationsvorrichtung (210) bezogen ist;
Auswählen (350) von einem der Datenobjekte (265) basierend auf der Art des erfassten Auslöseereignisses und der Statusinformation (270); und
Senden (360) des ausgewählten Datenobjekts zu der zweiten Kommunikationsvorrichtung (210), sodass mögliche Auslöseereignisse, auf welchen das Auswählen basiert, zumindest (a) eine anfängliche Einrichtung einer Kommunikationssitzung und, (b) dass eine Kommunikationssitzung getrennt wird, aufweisen.

2. Verfahren nach Anspruch 1, wobei das Erfassen (330) des Auslöseereignisses, welches auf eine Kommunikation zwischen der ersten Kommunikationsvorrichtung (205) und der zweiten Kommunikationsvorrichtung (210) bezogen ist, ein Empfangen einer Nachricht von der ersten Kommunikationsvorrichtung (205) umfasst, wobei die Nachricht einen Hinweis umfasst, welcher sich auf das erfasste Auslöseereignis und die Statusinformation (270) für die erste Kommunikationsvorrichtung (205) bezieht.

3. Verfahren nach Anspruch 1, ferner umfassend ein Empfangen (340) eines Identifizierungszeichens, welches sich auf die zweite Kommunikationsvorrichtung (210) oder einen Benutzer der zweiten Kommunikationsvorrichtung (210) bezieht, wobei das Auswählen von einem der Datenobjekte (265) ferner auf dem Identifizierungszeichen basiert.

4. Verfahren nach Anspruch 1, wobei die Statusinformation (270) eine Ortsinformation oder eine Geschwindigkeitsinformation oder beides umfasst, welche sich auf die erste Kommunikationsvorrichtung (205) beziehen.

5. Verfahren nach Anspruch 1, wobei die Statusinformation (270) eine Vorhandenseininformation oder eine Sensorinformation umfasst, welche einer Umgebungstemperatur, einem Umgebungsgeräusch, einer Umgebungsbeleuchtung, einer Beschleunigung und/oder einem Druck an der ersten Kommunikationsvorrichtung (205) entspricht.

6. Verfahren nach Anspruch 1, wobei das ausgewählte Datenobjekt ausgestaltet ist, mit der Statusinformation (270) geändert zu werden, und wobei das Verfahren ferner ein Verändern des ausgewählten Datenobjekts mit der Statusinformation (270) umfasst, und wobei das Senden des ausgewählten Datenobjekts ein Senden des veränderten Datenobjekts zu der zweiten Kommunikationsvorrichtung (210) umfasst.

7. Vorrichtung, umfassend einen Verarbeitungsschaltkreis, welcher ausgestaltet ist:
mehrere Datenobjekte (265), welche sich auf einen ersten Benutzer einer ersten Kommunikationsvorrichtung (205) beziehen, zu speichern;
eine Statusinformation (270) von der ersten Kommunikationsvorrichtung (205) zu empfangen oder eine Statusinformation (270) für die erste Kommunikationsvorrichtung (205) zu bestimmen;
ein Auslöseereignis, welches sich auf eine Kommunikation zwischen der ersten Kommunikationsvorrichtung (205) und einer zweiten Kommunikationsvorrichtung (210) bezieht, zu erfassen;
eines der Datenobjekte (265) basierend auf der Art des erfassten Auslöseereignisses und der Statusinformation (270) für die erste Kommunikationsvorrichtung (205) auszuwählen; und
das ausgewählte Datenobjekts zu der zweiten Kommunikationsvorrichtung (210) zu senden, sodass mögliche Auslöseereignisse, auf welchen das Auswählen basiert, zumindest (a) eine anfängliche Einrichtung einer Kommunikationssitzung und, (b) dass eine Kommunikationssitzung getrennt wird, aufweisen.

8. Vorrichtung nach Anspruch 7, wobei die Vorrichtung ein Datenobjektserver (500) ist, und wobei der Verarbeitungsschaltkreis ausgestaltet ist, das Auslöseereignis, welches sich auf eine Kommunikation zwischen der ersten Kommunikationsvorrichtung (205) und der zweiten Kommunikationsvorrichtung (210) bezieht, durch Empfangen einer Nachricht von der ersten Kommunikationsvorrichtung (205) zu erfassen, wobei die Nachricht einen Hinweis umfasst, welcher sich auf das erfasste Auslöseereignis und die Statusinformation (270) für die erste Kommunikationsvorrichtung (205) bezieht.

9. Vorrichtung nach Anspruch 7, wobei die Vorrichtung ein Datenobjektserver (500) ist, und wobei der Verarbeitungsschaltkreis ferner ausgestaltet ist, ein Identifizierungszeichen zu empfangen, welches sich auf die zweite Kommunikationsvorrichtung (210) oder einen Benutzer der zweiten Kommunikationsvorrichtung (210) bezieht, und wobei die Auswahl von einem der Datenobjekte (265) ferner auf dem Identifizierungszeichen basiert.

10. Vorrichtung nach Anspruch 7, wobei die Vorrichtung ein Datenobjektserver (500) ist, und wobei die Statusinformation (270) eine oder mehrere umfasst von: einer Ortsinformation, einer Geschwindigkeitsinformation oder beides, welche sich auf die erste Kommunikationsvorrichtung (205) beziehen; einer Vorhandenseininformation, welche sich auf die erste Kommunikationsvorrichtung (205) bezieht; und einer Sensorinformation, welche sich auf eine Umgebungstemperatur, ein Umgebungsgeräusch und/oder ein Umgebungslicht an der ersten Kommunikationsvorrichtung (205) bezieht.

11. Vorrichtung nach Anspruch 7, wobei die Vorrichtung ein Datenobjektserver (500) ist, und wobei das ausgewählte Datenobjekt ausgestaltet ist, mit der Statusinformation (270) verändert zu werden, und wobei der Verarbeitungsschaltkreis ferner ausgestaltet ist, das ausgewählte Datenobjekt mit der Statusinformation (270) vor einem Senden des geänderten Datenobjekts zu der zweiten Kommunikationsvorrichtung (210) zu ändern.

12. Vorrichtung nach Anspruch 7, wobei die Vorrichtung die erste Kommunikationsvorrichtung (400,500) ist, und wobei der Verarbeitungsschaltkreis ausgestaltet ist, die Statusinformation zu gewinnen durch:
Bestimmen der Statusinformation (270) für die erste Kommunikationsvorrichtung (205) für eine Verwendung beim Auswählen des Datenobjekts.

13. Vorrichtung nach Anspruch 12, wobei der Verarbeitungsschaltkreis ferner ausgestaltet ist, eines von den Datenobjekten (265) basierend auf einem Identifizierungszeichen für die zweite Kommunikationsvorrichtung (210) auszuwählen.

14. Vorrichtung nach Anspruch 12, wobei die Statusinformation (270) eine Ortsinformation oder eine Geschwindigkeitsinformation oder beides umfasst, welche sich auf die erste Kommunikationsvorrichtung (205) beziehen.

15. Vorrichtung nach Anspruch 12, wobei das ausgewählte Datenobjekt ausgestaltet ist, mit der Statusinformation (270) verändert zu werden, und wobei der Verarbeitungsschaltkreis ferner ausgestaltet ist, das ausgewählte Datenobjekt mit der Statusinformation (270) vor einem Senden des geänderten Datenobjekts zu der zweiten Kommunikationsvorrichtung (210) zu ändern.

## Revendications

1. Procédé de gestion de la distribution d'objets de données sur un réseau de communication, comprenant les étapes consistant à :
stocker (310) une pluralité d'objets de données (265) correspondant à un premier utilisateur d'un premier dispositif de communication (205) ;
recevoir (320) des informations d'état (270) du premier dispositif de communication (205) ou déterminer des informations d'état (270) pour le premier dispositif de communication (205) ;
détecter (330) un événement déclencheur lié à une communication entre le premier dispositif de communication (205) et un second dispositif de communication (210) ;
sélectionner (350) un des objets de données (265) en fonction du type d'événement déclencheur détecté et des informations d'état (270) ; et
envoyer (360) l'objet de données sélectionné au second dispositif de communication (210), si bien que des événements déclencheurs possibles sur lesquels se fonde la sélection comprennent au moins (a) un établissement initial d'une session de communication et (b) la déconnexion d'une session de communication.

2. Procédé selon la revendication 1, dans lequel l'étape de détection (330) de l'événement déclencheur lié à la communication entre le premier dispositif de communication (205) et le second dispositif de communication (210) comprend l'étape consistant à recevoir un message du premier dispositif de communication (205), le message comprenant un indicateur correspondant à l'événement déclencheur détecté et aux informations d'état (270) pour le premier dispositif de communication (205).

3. Procédé selon la revendication 1, comprenant en outre l'étape consistant à recevoir (340) un identificateur correspondant au second dispositif de communication (210) ou à un utilisateur du second dispositif de communication (210), dans lequel la sélection de l'un des objets de données (265) est en outre fondée sur l'identificateur.

4. Procédé selon la revendication 1, dans lequel les informations d'état (270) comprennent des informations de position ou des informations de vélocité, ou les deux, qui correspondent au premier dispositif de communication (205).

5. Procédé selon la revendication 1, dans lequel les informations d'état (270) comprennent des informations de présence ou des informations de capteurs correspondant à un ou plusieurs des paramètres de température ambiante, de niveau sonore ambiant, de luminosité ambiante, d'accélération et de pression, au niveau du premier dispositif de communication (205), ou les deux.

6. Procédé selon la revendication 1, dans lequel l'objet de données sélectionné est configuré pour être modifié par les informations d'état (270), dans lequel le procédé comprend en outre l'étape consistant à modifier l'objet de données sélectionné avec les informations d'état (270) et dans lequel l'étape d'envoi de l'objet de données sélectionné comprend l'étape consistant à envoyer l'objet de données modifié au second dispositif de communication (210).

7. Dispositif comprenant une circuiterie de traitement configurée pour :
stocker une pluralité d'objets de données (265) correspondant à un premier utilisateur d'un premier dispositif de communication (205) ;
recevoir des informations d'état (270) du premier dispositif de communication (205) ou déterminer des informations d'état (270) pour le premier dispositif de communication (205) ;
détecter un événement déclencheur lié à une communication entre le premier dispositif de communication (205) et un second dispositif de communication (210) ;
sélectionner un des objets de données (265) en fonction du type d'événement déclencheur détecté et des informations d'état (270) pour le premier dispositif de communication (205) ; et
envoyer l'objet de données sélectionné au second dispositif de communication (210), si bien que des événements déclencheurs possibles sur lesquels se fonde la sélection comprennent au moins (a) un établissement initial d'une session de communication et (b) la déconnexion d'une session de communication.

8. Dispositif selon la revendication 7, dans lequel le dispositif est un serveur d'objets de données (500) et dans lequel la circuiterie de traitement est configurée pour détecter l'événement déclencheur lié à la communication entre le premier dispositif de communication (205) et le second dispositif de communication (210) en recevant un message du premier dispositif de communication (205), le message comprenant un indicateur correspondant à l'événement déclencheur détecté et aux informations d'état (270) pour le premier dispositif de communication (205).

9. Dispositif selon la revendication 7, dans lequel le dispositif est un serveur d'objets de données (500), dans lequel la circuiterie de traitement est configurée pour recevoir un identificateur correspondant au second dispositif de communication (210) ou à un utilisateur du second dispositif de communication (210) et dans lequel la sélection de l'un des objets de données (265) est en outre fondée sur l'identificateur.

10. Dispositif selon la revendication 7, dans lequel le dispositif est un serveur d'objets de données (500) et dans lequel les informations d'état (270) comprennent un ou plusieurs des paramètres suivants : informations de position ou informations de vélocité, ou les deux, qui correspondent au premier dispositif de communication (205) ; informations de présence correspondant au premier dispositif de communication (205) ; et informations de capteurs correspondant à un ou plusieurs des paramètres de température ambiante, de niveau sonore ambiant et de luminosité ambiante au niveau du premier dispositif de communication (205).

11. Dispositif selon la revendication 7, dans lequel le dispositif est un serveur d'objets de données (500) et dans lequel l'objet de données sélectionné est configuré pour être modifié par les informations d'état (270) et dans lequel la circuiterie de traitement est en outre configurée pour modifier l'objet de données sélectionné avec les informations d'état (270) avant d'envoyer l'objet de données modifié au second dispositif de communication (210).

12. Dispositif selon la revendication 7, dans lequel le dispositif est le premier dispositif de communication (400, 500) et dans lequel la circuiterie de traitement est configurée pour obtenir les informations d'état en :
déterminant les informations d'état (270) pour le premier dispositif de communication (205) à utiliser dans la sélection de l'objet de données.

13. Dispositif selon la revendication 12, dans lequel la circuiterie de traitement est en outre configurée pour sélectionner l'objet parmi les objets de données (265) en se fondant sur un identificateur pour le second dispositif de communication (210).

14. Dispositif selon la revendication 12, dans lequel les informations d'état (270) comprennent des informations de position ou des informations de vélocité, ou les deux, qui correspondent au premier dispositif de communication (205).

15. Dispositif selon la revendication 12, dans lequel l'objet de données sélectionné est configuré pour être modifié par les informations d'état (270) et dans lequel la circuiterie de traitement est en outre configurée pour modifier l'objet de données sélectionné avec les informations d'état (270) avant d'envoyer l'objet de données modifié au second dispositif de communication (210).
